(19) **Europäisches Patentamt / European Patent Office / Office européen des brevets**

(11) **EP 4 553 928 A1**

(12) **EUROPEAN PATENT APPLICATION**
published in accordance with Art. 153(4) EPC

(43) Date of publication:
14.05.2025 Bulletin 2025/20

(21) Application number: 23863467.9

(22) Date of filing: 05.09.2023

(51) International Patent Classification (IPC):
$H01M\ 4/525^{(2010.01)}$  $H01M\ 4/505^{(2010.01)}$
$H01M\ 4/131^{(2010.01)}$  $H01M\ 10/052^{(2010.01)}$
$H01M\ 4/02^{(2006.01)}$

(52) Cooperative Patent Classification (CPC):
H01M 4/02; H01M 4/131; H01M 4/505;
H01M 4/525; H01M 10/052

(86) International application number:
PCT/KR2023/013250

(87) International publication number:
WO 2024/053995 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.09.2022 KR 20220113918

(71) Applicant: LG Chem, Ltd.
Yeongdeungpo-gu
Seoul 07336 (KR)

(72) Inventors:
• GU, Ye Hyeon
  Daejeon 34122 (KR)

• JEONG, Jin Hoo
  Daejeon 34122 (KR)
• SHIM, Jong Hyun
  Daejeon 34122 (KR)
• HWANG, Joo Kyoung
  Daejeon 34122 (KR)
• LEE, Ji Young
  Daejeon 34122 (KR)
• RYU, Hyeon Mo
  Daejeon 34122 (KR)

(74) Representative: Hoffmann Eitle
Patent- und Rechtsanwälte PartmbB
Arabellastraße 30
81925 München (DE)

(54) **CATHODE ACTIVE MATERIAL, CATHODE COMPRISING SAME, AND LITHIUM SECONDARY BATTERY**

(57) The present invention relates to a positive electrode active material, and to a positive electrode active material including a lithium transition metal composite oxide in a form of a single particle which contains nickel, cobalt, and manganese, wherein the lithium transition metal composite oxide contains 60 mol% or more of the nickel among total transition metals and has a $D_{50}$ of 5 μm or more, and a positive electrode and a lithium secondary battery which include the same.

[FIG. 1]

## Description

### TECHNICAL FIELD

[Cross-reference to Related Applications]

This application claims priority from Korean Patent Application No. 10-2022-0113918, filed on September 8, 2022, the disclosure of which is incorporated by reference herein.

[Technical Field]

The present invention relates to a positive electrode active material, and a positive electrode and a lithium secondary battery which include the same.

### BACKGROUND ART

With the recent technological development of electric vehicles, demand for high-capacity secondary batteries is increasing, and, accordingly, research on a high nickel (high Ni) positive electrode active material having excellent capacity characteristics is being actively conducted.

With respect to the high nickel positive electrode active material formed in a secondary particle structure in which primary particles are aggregated, structural degradation occurs during charge and discharge of a lithium secondary battery, but a relatively large change in lattice structure constant, that is, a relatively large volume change in unit lattice occurs. This volume change causes cracks in the positive electrode active material. Also, cracks may occur in the positive electrode active material due to pressure even during electrode rolling.

The cracks thus occurred in the high nickel positive electrode active material become more severe in a charging and discharging process of the lithium secondary battery, and accordingly, since the crack acts as a void that may not be reached by an electrolyte solution or reduces conductivity, it degrades life characteristics of the lithium secondary battery or acts as a factor in increasing resistance.

As a way to minimize the occurrence of the cracks in the secondary particle structure, attempts are being made to prepare a positive electrode active material in a form of a single particle. Conventionally, in order to prepare the positive electrode active material in the form of a single particle, after a transition metal hydroxide prepared by a coprecipitation method has been mixed with a lithium compound and expanded secondary particles have been first prepared by over-sintering the mixture, the secondary particles have been ground to be prepared as a form of a single particle. However, in a case in which the positive electrode active material in the form of a single particle is prepared as described above, since diameters of primary particles constituting the secondary particle are non-uniform, there is a problem in that a particle size distribution of the positive electrode active material in the form of a single particle, which is obtained after the grinding, is increased. But, since performance and electrode design of the lithium secondary battery vary greatly depending on the particle size distribution of the positive electrode active material, it is very important to control the particle size distribution and average particle diameter of the positive electrode active material.

[Prior Art Documents]

[Patent Documents]

(Patent Document 1) KR 10-1785262 B1
(Patent Document 2) KR 10-2017-0119573 A

### DISCLOSURE OF THE INVENTION

### TECHNICAL PROBLEM

An aspect of the present invention provides a positive electrode active material in a form of a single particle, in which an average particle diameter is controlled, while having a negative skewness.

Another aspect of the present invention provides a positive electrode and a lithium secondary battery in which rolling density during preparation of the positive electrode is improved by including the positive electrode active material in the form of a single particle.

**TECHNICAL SOLUTION**

In order to solve the above-described tasks, the present invention provides a method of preparing a positive electrode active material, the positive electrode active material prepared therefrom, and a positive electrode and a lithium secondary battery which include the same.

(1) The present invention provides a positive electrode active material including a lithium transition metal composite oxide in a form of a single particle which contains nickel, cobalt, and manganese, wherein the lithium transition metal composite oxide contains 60 mol% or more of the nickel among total transition metals, has a $D_{50}$ of 5 $\mu$m or more, and has a rolling density calculated by Equation 3 of 3.56 g/cm$^3$ or more when a pellet is formed by applying a force until the force reaches 9,000 kgf using an automatic pellet press.

Rolling density (g/cm$^3$) = positive electrode active material weight (g)/pellet volume (cm$^3$)          [Equation 3]

(2) The present invention provides the positive electrode active material of (1) above, wherein the lithium transition metal composite oxide in the form of a single particle is a single particle or a secondary particle in which 10 or less primary particles are aggregated.
(3) The present invention provides the positive electrode active material of (1) or (2) above, wherein the lithium transition metal composite oxide has an average composition represented by Formula 1.

[Formula 1]          $Li_xNi_aCo_bMn_cM^1_dO_2$

In Formula 1, $M^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), fluorine (F), phosphorus (P), sulfur (S), and yttrium (Y), and $0.9 \leq x \leq 1.3$, $0.6 \leq a < 1.0$, $0 < b < 0.4$, $0 < c < 0.4$, $0 \leq d \leq 0.2$, and a+b+c+d=1.
(4) The present invention provides the positive electrode active material of (3) above, wherein x is in a range of 0.9 to 1.1.
(5) The present invention provides the positive electrode active material of any one of (1) to (4) above, wherein the $D_{50}$ is in a range of 5 $\mu$m to 9 $\mu$m.
(6) The present invention provides the positive electrode active material of any one of (1) to (5) above, wherein the rolling density is in a range of 3.56 g/cm$^3$ to 3.80 g/cm$^3$.
(7) The present invention provides the positive electrode active material of any one of (1) to (6) above, wherein a mode in a cumulative distribution of volume according to a particle diameter is greater than the $D_{50}$.
(8) The present invention provides the positive electrode active material of (7) above, wherein the positive electrode active material has a negative skewness value calculated by Equation 1 of greater than 0.

$$[Equation\ 1]$$

$$Negative\ skewness\ =\ (Mode\ -\ D_{10})/D_{50}$$

(9) The present invention provides the positive electrode active material of (8) above, wherein the negative skewness value is in a range of 0.40 to 0.75.
(10) The present invention provides a positive electrode including the positive electrode active material of any one of (1) to (9).
(11) The present invention provides a lithium secondary battery including the positive electrode of (10); a negative electrode; a separator disposed between the positive electrode and the negative electrode, and an electrolyte.

**ADVANTAGEOUS EFFECTS**

Since a positive electrode active material of the present invention is in a form of a single particle, in which an average particle diameter is controlled, while having a negative skewness, energy density of a lithium secondary battery may be increased by improving rolling density when a positive electrode is prepared by including the positive electrode active material, and, accordingly, capacity characteristics are improved.

## BRIEF DESCRIPTION OF THE DRAWINGS

FIG. 1 is a graph illustrating a cumulative volume distribution according to a particle diameter of each of positive electrode active materials prepared in Examples and Comparative Examples of the present invention.

FIG. 2 is a scanning electron microscope image of a positive electrode active material prepared in Example 1 of the present invention.

FIG. 3 is a scanning electron microscope image of a positive electrode active material prepared in Example 2 of the present invention.

FIG. 4 is a scanning electron microscope image of a positive electrode active material prepared in Example 3 of the present invention.

FIG. 5 is a scanning electron microscope image of a positive electrode active material prepared in Example 4 of the present invention.

FIG. 6 is a scanning electron microscope image of a positive electrode active material prepared in Example 5 of the present invention.

FIG. 7 is a scanning electron microscope image of a positive electrode active material prepared in Example 6 of the present invention.

FIG. 8 is a scanning electron microscope image of a positive electrode active material prepared in Example 7 of the present invention.

FIG. 9 is a scanning electron microscope image of a positive electrode active material prepared in Comparative Example 1 of the present invention.

FIG. 10 is a scanning electron microscope image of a positive electrode active material prepared in Comparative Example 2 of the present invention.

FIG. 11 is a scanning electron microscope image of a positive electrode active material prepared in Comparative Example 3 of the present invention.

FIG. 12 is a scanning electron microscope image of a positive electrode active material prepared in Comparative Example 4 of the present invention.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression 'primary particle' denotes a smallest particle unit which is distinguished as one body when a cross section of a positive electrode active material is observed through a scanning electron microscope (SEM), wherein it may be composed of a plurality of crystallites.

In the present invention, the expression 'secondary particle' denotes a secondary structure formed by aggregation of a plurality of primary particles. An average particle diameter of the secondary particle may be measured using a particle size analyzer.

The terms 'D$_{10}$', 'D$_{50}$', and 'D$_{90}$' in the present invention denote particle diameters at 10% (D$_{10}$), 50% (D$_{50}$), and 90% (D$_{90}$) of cumulative distribution of volume according to the particle diameter, respectively. After dispersing measurement target powder in a dispersion medium, the dispersion medium is introduced into a commercial laser diffraction particle size measurement instrument (e.g., mastersizer 3000 by Malvern Panalytical Ltd.), a cumulative distribution of volume according to a particle diameter is calculated by measuring a difference in diffraction patterns due to a particle size when particles pass through a laser beam, and the D$_{10}$, D$_{50}$, and D$_{90}$ may be measured by calculating particle diameters at 10%, 50%, and 90% of the cumulative distribution of volume according to the particle diameter using the measurement instrument. Also, the D$_{50}$ in the present invention may be expressed as an average particle diameter.

The expression 'form of a single particle' in the present invention has a meaning including that a particle of a positive electrode active material and/or a lithium transition metal composite oxide is both a single particle and a form in which 2 to 10 particles are aggregated. That is, in the positive electrode active material in a form of a single particle and/or lithium transition metal composite oxide in a form of a single particle of the present invention, a particle of the positive electrode active material and/or lithium transition metal composite oxide may include at least one selected from the group consisting of a single particle and a particle in which 2 to 10 particles are aggregated.

Positive Electrode Active Material

The present invention provides a positive electrode active material.

According to an embodiment of the present invention, the positive electrode active material includes a lithium transition metal composite oxide in a form of a single particle which contains nickel, cobalt, and manganese, wherein the lithium transition metal composite oxide contains 60 mol% or more of the nickel among total transition metals, has a $D_{50}$ of 5 $\mu$m or more, and may have a rolling density calculated by the following Equation 3 of 3.56 g/cm$^3$ or more when a pellet is formed by applying a force until the force reaches 9,000 kgf using an automatic pellet press.

Rolling density (g/cm$^3$) = positive electrode active material weight (g)/pellet volume (cm$^3$) [Equation 3]

According to an embodiment of the present invention, the positive electrode active material may include a lithium transition metal composite oxide in a form of a single particle. As a specific example, the lithium transition metal composite oxide in the form of a single particle may be a single particle or a secondary particle in which 10 or less primary particles are aggregated. With respect to a conventional positive electrode active material in a form of a secondary particle in which more than 10 primary particles were aggregated, porosity had to be increased in order to minimize cracks which were caused by pressure during rolling for preparation of an electrode, and this eventually causes a decrease in energy density of a lithium secondary battery. However, in a case in which the lithium transition metal composite oxide has the form of a single particle or a secondary particle in which 10 or less primary particles are aggregated as in the positive electrode active material of the present invention, when charging and discharging a lithium secondary battery, cracks due to a volume change in a unit lattice may be minimized, particularly, cracks caused by the pressure during rolling for the preparation of the electrode may be minimized. Thus, in a case in which the positive electrode active material of the present invention is used, since rolling may be performed to have lower porosity during the rolling for the preparation of the electrode, energy density of the lithium secondary battery may be improved.

According to an embodiment of the present invention, the lithium transition metal composite oxide may be a high nickel-based lithium transition metal composite oxide which contains nickel and has a nickel (Ni) content of 60 mol% or more based on total transition metals. In this case, high energy density may be ensured due to the high nickel content.

According to an embodiment of the present invention, the lithium transition metal composite oxide may have an average composition represented by Formula 1 below.

[Formula 1]     $Li_xNi_aCo_bMn_cM^1_dO_2$

In Formula 1, M$^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), fluorine (F), phosphorus (P), sulfur (S), and yttrium (Y), and $0.9 \leq x \leq 1.3$, $0.6 \leq a < 1.0$, $0 < b < 0.4$, $0 < c < 0.4$, $0 \leq d \leq 0.2$, and $a+b+c+d=1$.

According to an embodiment of the present invention, M$^1$ in Formula 1 may be a doping element that may be included in the lithium transition metal composite oxide, and may be appropriately selected as needed.

According to an embodiment of the present invention, in Formula 1, x is a molar ratio of lithium to transition metals in the lithium transition metal composite oxide, wherein x may be 0.9 or more, 0.95 or more, or 1.0 or more, and also, may be 1.1 or less, 1.07 or less, 1.05 or less, or 1.03 or less.

According to an embodiment of the present invention, in Formula 1, a, b, c, and d may be mole fractions of nickel (Ni), cobalt (Co), manganese (Mn), and the doping element (M$^1$) among the transition metals, respectively. As a specific example, a is the mole fraction of the nickel (Ni) among the transition metals, wherein a may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and also, may be less than 1.0, 0.99 or less, 0.98 or less, 0.97 or less, or 0.96 or less. Also, b is the mole fraction of the cobalt (Co) among the transition metals, wherein b may be greater than 0, 0.01 or more, 0.02 or more, or 0.03 or more, and also, may be less than 0.4, 0.3 or less, 0.2 or less, 0.1 or less, 0.09 or less, 0.08 or less, 0.07 or less, 0.06 or less, or 0.05 or less. c is the mole fraction of the manganese (Mn) among the transition metals, wherein c may be greater than 0, 0.01 or more, or 0.05 or more, and also, may be less than 0.4, 0.3 or less, 0.2 or less, 0.1 or less, 0.09 or less, 0.08 or less, 0.07 or less, 0.06 or less, or 0.05 or less. d is the mole fraction of the doping element (M$^1$) among the transition metals, wherein d may be 0, 0.01 or more, 0.02 or more, 0.03 or more, 0.04 or more, 0.05 or more, 0.06 or more, 0.07 or more, 0.08 or more, 0.09 or more, 0.10 or more, 0.11 or more, 0.12 or more, 0.13 or more, 0.14 or more, 0.15 or more, 0.16 or more, 0.17 or more, 0.18 or more, or 0.19 or more, and also, may be less than 0.20, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, 0.02 or less, or 0.01 or less.

According to an embodiment of the present invention, the positive electrode active material may have a $D_{50}$ of 5

$\mu$m or more. Conventionally, when preparing a positive electrode active material in a form of a single particle, since, after a precursor in a form of a hydroxide has been mixed with a lithium compound and expanded secondary particles have been prepared by over-sintering the mixture, the secondary particles have been ground to prepare the positive electrode active material in the form of a single particle, the positive electrode active material in the form of a single particle, as a small particle having a $D_{50}$ of about 1 $\mu$m to 4 $\mu$m, has been prepared, and thus, there was a limit to increase the $D_{50}$ of the positive electrode active material in the form of a single particle. However, since the positive electrode active material according to the present invention is prepared by a method of preparing a positive electrode active material as described subsequently, it may have a $D_{50}$ of 5 $\mu$m or more while being in the form of a single particle. Since the positive electrode active material of the present invention has a $D_{50}$ of 5 $\mu$m or more while being in the form of a single particle, it may further minimize occurrence of cracks in the positive electrode active material and, in terms of improving the rolling density, it is more advantageous than the positive electrode active material in the form of a single particle, as the small particle having a $D_{50}$ of about 1 $\mu$m to 4 $\mu$m. That is, the positive electrode active material of the present invention is characterized in that it is in the form of a single particle and has a $D_{50}$ of 5 $\mu$m or more. As a specific example, the positive electrode active material may have a $D_{50}$ of 5 $\mu$m or more, 5.1 $\mu$m or more, 5.2 $\mu$m or more, 5.3 $\mu$m or more, 5.4 $\mu$m or more, 5.5 $\mu$m or more, 5.6 $\mu$m or more, 5.7 $\mu$m or more, 5.8 $\mu$m or more, 5.9 $\mu$m or more, 6.0 $\mu$m or more, 6.1 $\mu$m or more, 6.2 $\mu$m or more, 6.3 $\mu$m or more, 6.4 $\mu$m or more, 6.5 $\mu$m or more, 6.6 $\mu$m or more, 6.7 $\mu$m or more, 6.8 $\mu$m or more, 6.9 $\mu$m or more, or 7.0 $\mu$m or more. Also, the positive electrode active material, in terms of distinguishing it from a positive electrode active material in a form of a secondary particle, as a large particle with a $D_{50}$ of about 10 $\mu$m or more, may have a $D_{50}$ of 9 $\mu$m or less, 8.9 $\mu$m or less, 8.8 $\mu$m or less, 8.7 $\mu$m or less, 8.6 $\mu$m or less. 8.5 $\mu$m or less, 8.4 $\mu$m or less, 8.3 $\mu$m or less, 8.2 $\mu$m or less, 8.1 $\mu$m or less, 8.0 $\mu$m or less, 7.9 $\mu$m or less, 7.8 $\mu$m or less, 7.7 $\mu$m or less, 7.6 $\mu$m or less, 7.5 $\mu$m or less, 7.4 $\mu$m or less, 7.3 $\mu$m or less, 7.2 $\mu$m or less, 7.1 $\mu$m or less, 7.0 $\mu$m or less, or 6.5 $\mu$m or less, and, in the present invention, in order to distinguish the positive electrode active material having the above $D_{50}$ from the small particle-sized positive electrode active material and the large particle-sized positive electrode active material, the positive electrode active material may be referred to as a positive electrode active material of a medium-sized single particle.

According to an embodiment of the present invention, when a pellet is formed by applying a force until the force reaches 9,000 kgf using an automatic pellet press, the positive electrode active material may have a rolling density calculated by Equation 3 of 3.56 g/cm$^3$ or more. In this case, when a positive electrode is formed by using the positive electrode active material alone or by mixing the positive electrode active material with the small particle-sized or large particle-sized positive electrode active material, porosity of the positive electrode may be further reduced by minimizing the occurrence of cracks due to rolling, and accordingly, since a larger amount of the positive electrode active material may be included in the same volume of a positive electrode active material layer, the energy density of the lithium secondary battery may be further improved.

According to an embodiment of the present invention, the positive electrode active material needs to have a rolling density of 3.56 g/cm$^3$ or more. This is the minimum standard for achieving an effect according to the present invention, wherein the rolling density must be 3.56 g/cm$^3$ or more to achieve the energy density according to the present invention. As a specific example, the positive electrode active material may have a rolling density of 3.57 g/cm$^3$ or more, 3.58 g/cm$^3$ or more, 3.59 g/cm$^3$ or more, 3.60 g/cm$^3$ or more, 3.61 g/cm$^3$ or more, 3.62 g/cm$^3$ or more, 3.63 g/cm$^3$ or more, 3.64 g/cm$^3$ or more, 3.65 g/cm$^3$ or more, 3.66 g/cm$^3$, or more, or 3.67 g/cm$^3$ or more, and, since the rolling density may be significantly improved within this range during preparation of the positive electrode, the energy density of the lithium secondary battery may be increased, and, accordingly, capacity characteristics may be further improved. Also, the positive electrode active material may have a rolling density of 3.80 g/cm$^3$ or less, 3.75 g/cm$^3$ or less, 3.74 g/cm$^3$ or less, 3.73 g/cm$^3$ or less, or 3.72 g/cm$^3$ or less.

According to an embodiment of the present invention, the positive electrode active material may be one in which, particularly, the cumulative distribution of volume according to the particle diameter of the positive electrode active material particle is adjusted in addition to the nickel content, the $D_{50}$, and the rolling density. As a specific example, with respect to the positive electrode active material, a mode in the cumulative distribution of volume according to the particle diameter of the positive electrode active material particle may be greater than the $D_{50}$.

In a positive electrode active material as an aggregate of a plurality of particles constituting a cumulative distribution of volume according to a particle diameter, in a case in which a mode in the cumulative distribution of volume according to the particle diameter is greater than $D_{50}$ as in the positive electrode active material of the present invention, since an amount of fine powder having a relatively small particle diameter is high, pores between positive electrode active material particles may be minimized when a positive electrode active material layer is formed by using the positive electrode active material, and, accordingly, a larger amount of the positive electrode active material particles may be included in the same volume to ensure higher energy density. Thus, even if the positive electrode active material has the same $D_{50}$, since the energy density varies depending on a difference between the mode and the $D_{50}$ in the cumulative distribution of volume according to the particle diameter, it is important to control this and the positive electrode active material according to the present application may further improve the energy density of the lithium secondary battery by adjusting the mode in the cumulative distribution of volume according to the particle diameter to be greater than the $D_{50}$ in

addition to the nickel content, $D_{50}$, and rolling density.

According to an embodiment of the present invention, the positive electrode active material may have a negative skewness value calculated by Equation 1 below of greater than 0.

$$[Equation\ 1]$$

$$Negative\ skewness\ =\ (Mode\ -\ D_{10})/D_{50}$$

Typically, skewness is a statistical measure of asymmetry of a specific distribution, wherein, if a skewness value is positive, it is indicated as positive skewness, and, if the skewness value is negative, it is indicated as negative skewness. However, since the positive skewness and negative skewness expressed by a conventional method are expressed in the form of a cube of deviation from an average, the skewness value becomes larger as the skewness is increased, and thus, it is not appropriate to determine the amount of the fine powder of the positive electrode active material in the present invention. Therefore, in the present invention, the negative skewness is newly defined and represented by Equation 1 above. According to Equation 1 above, the negative skewness in the present invention is expressed as a ratio of a difference between the mode and $D_{10}$ to the $D_{50}$. The amount of the fine powder of the positive electrode active material, as the aggregate of the plurality of particles constituting the cumulative distribution of volume according to the particle diameter, may be indirectly confirmed by comparing the difference between the mode and the $D_{10}$ corresponding to a fine powder region based on the $D_{50}$.

According to an embodiment of the present invention, the positive electrode active material may have a negative skewness value calculated by Equation 1 of greater than 0, 0.10 or more, 0.20 or more, 0.30 or more, 0.40 or more, or 0.45 or more, and, also, of 0.75 or less, 0.70 or less, 0.65 or less, 0.60 or less, 0.59 or less, 0.58 or less, 0.57 or less, 0.56 or less, or 0.55 or less, and, within this range, it is possible to minimize the cracks caused by the pressure during the rolling for the preparation of the electrode, maximize the energy density of the lithium secondary battery, and secure the capacity characteristics by appropriately adjusting the amount of the fine powder having a relatively small particle diameter.

According to an embodiment of the present invention, the positive electrode active material may have a mode in the cumulative distribution of volume according to the particle diameter of 5.5 $\mu$m or more, 5.6 $\mu$m or more, 5.7 $\mu$m or more, 5.8 $\mu$m or more, 5.9 $\mu$m or more, 6.0 $\mu$m or more, 6.1 $\mu$m or more, 6.2 $\mu$m or more, 6.3 $\mu$m or more, 6.4 $\mu$m or more, 6.5 $\mu$m or more, 6.6 $\mu$m or more, 6.7 $\mu$m or more, 6.8 $\mu$m or more, 6.9 $\mu$m or more, 7.0 $\mu$m or more, 7.1 $\mu$m or more, 7.2 $\mu$m or more, 7.3 $\mu$m or more, 7.4 $\mu$m or more, or 7.5 $\mu$m or more, and, also, of 9.5 $\mu$m or less, 9.4 $\mu$m or less, 9.3 $\mu$m or less, 9.2 $\mu$m or less, 9.1 $\mu$m or less, 9.0 $\mu$m or less, 8.9 $\mu$m or less, 8.8 $\mu$m or less, 8.7 $\mu$m or less, 8.6 $\mu$m or less, 8.5 $\mu$m or less, 8.4 $\mu$m or less, 8.3 $\mu$m or less, 8.2 $\mu$m or less, 8.1 $\mu$m or less, 8.0 $\mu$m or less, 7.9 $\mu$m or less, 7.8 $\mu$m or less, 7.7 $\mu$m or less, 7.6 $\mu$m or less, 7.5 $\mu$m or less, or 7.0 $\mu$m or less, and, within this range, in addition to the nickel content, $D_{50}$, and rolling density, the energy density of the lithium secondary battery may be further improved.

According to an embodiment of the present invention, the positive electrode active material may have a $D_{10}$ in the cumulative distribution of volume according to the particle diameter of 3.0 $\mu$m or more, 3.1 $\mu$m or more, 3.2 $\mu$m or more, 3.3 $\mu$m or more, 3.4 $\mu$m or more, or 3.5 $\mu$m or more, and, also, of 6.0 $\mu$m or less, 5.5 $\mu$m or less, or 5.0 $\mu$m or less, and the energy density of the lithium secondary battery may be further improved by adjusting a fine powder size within this range.

According to an embodiment of the present invention, the positive electrode active material may have a difference between the mode and the $D_{50}$ of 1.0 $\mu$m or less, 0.9 $\mu$m or less, 0.8 $\mu$m or less, 0.7 $\mu$m or less, 0.6 $\mu$m or less, or 0.5 $\mu$m or less, and, also, of 0.1 $\mu$m or more, 0.2 $\mu$m or more, 0.3 $\mu$m or more, or 0.4 $\mu$m or more, and, within this range, in addition to the nickel content, $D_{50}$, and rolling density, the energy density of the lithium secondary battery may be further improved.

Method of Preparing Positive Electrode Active Material

The present invention provides a method of preparing a positive electrode active material which is for preparing the above positive electrode active material.

According to an embodiment of the present invention, the method of preparing a positive electrode active material includes the steps of: mixing a positive electrode active material precursor, which contains nickel, cobalt, and manganese and contains 60 mol% or more of the nickel among transition metals, and a lithium raw material and performing primary sintering to prepare a pre-sintered product (S10); and performing secondary sintering on the pre-sintered product prepared in step (S10) to prepare a lithium transition metal composite oxide in a form of a single particle (S20), wherein the secondary sintering may be performed at a lower temperature than the primary sintering. As described above, since the secondary sintering is performed at a lower temperature than the primary sintering, a positive electrode active material having a $D_{50}$ of $\mu$m or more and a rolling density calculated by Equation 3 of 3.56 g/cm$^3$ or more, when a pellet is formed by applying a force until the force reaches 9,000 kgf using an automatic pellet press, may be prepared.

According to an embodiment of the present invention, a temperature difference between the primary sintering of step (S10) and the secondary sintering of step (S20) may be 10°C or higher, 20°C or higher, 30°C or higher, 40°C or higher, or 50°C or higher, and also, may be 300°C or less, 250°C or less, 200°C or less, 150°C or less, or 100°C or less. As a specific example, the primary sintering of step (S10) may be performed at a temperature of 800°C to 1,000°C, and, as a more specific example, the primary sintering of step (S10) may be performed in a temperature range of 800°C to 1,000°C, 830°C to 950°C, or 850°C to 900°C. Also, the secondary sintering of step (S20) may be performed at a temperature of 600°C to 900°C, and, as a more specific example, the secondary sintering of step (S20) may be performed in a temperature range of 600°C to 900°C, 650°C to 850°C, or 700°C to 800°C.

According to an embodiment of the present invention, in the pre-sintered product prepared by the primary sintering of step (S10), since particles may be aggregated with each other, the secondary sintering of step (S20) may be performed on a form of a ground product by grinding the pre-sintered product prepared in step (S10).

According to an embodiment of the present invention, the positive electrode active material precursor, which contains nickel, cobalt, and manganese and contains 60 mol% or more of the nickel among the transition metals, may be a transition metal hydroxide or a transition metal oxide. As a specific example, the transition metal hydroxide may have an average composition represented by Formula 2 below, and the transition metal oxide may have an average composition represented by Formula 3 below.

[Formula 2]     $Ni_{a'}Co_{b'}Mn_{c'}(OH)_2$

[Formula 3]     $Ni_{a''}Co_{b''}Mn_{c''}O$

In Formula 2, $0.6 \leq a' < 1.0$, $0 < b' < 0.4$, $0 < c' < 0.4$, and $a'+b'+c'=1$, and, in Formula 3, $0.6 \leq a'' < 1.0$, $0 < b'' < 0.4$, $0 < c'' < 0.4$, and $a''+b''+c''=1$.

According to an embodiment of the present invention, in Formulae 2 and 3, a', a", b', b", c' , and c" may be mole fractions of nickel (Ni), cobalt (Co), and manganese (Mn) among transition metals, respectively. As a specific example, a' or a" is the mole fraction of the nickel (Ni) among the transition metals, wherein a' or a" may be 0.6 or more, 0.7 or more, 0.8 or more, 0.85 or more, 0.88 or more, 0.90 or more, 0.91 or more, 0.92 or more, 0.93 or more, 0.94 or more, 0.95 or more, or 0.96 or more, and, also, may be less than 1.0, 0.99 or less, 0.98 or less, 0.97 or less, or 0.96 or less. Also, b' or b" is the mole fraction of the cobalt (Co) among the transition metals, wherein b' or b" may be greater than 0, 0.01 or more, 0.02 or more, or 0.03 or more, and, also, may be less than 0.4, 0.3 or less, 0.2 or less, 0.1 or less, 0.09 or less, 0.08 or less, 0.07 or less, 0.06 or less, or 0.05 or less. Furthermore, c' or c" is the mole fraction of the manganese (Mn) among the transition metals, wherein c' or c" may be greater than 0, 0.01 or more, or 0.05 or more, and, also, may be less than 0.4, 0.3 or less, 0.2 or less, 0.1 or less, 0.09 or less, 0.08 or less, 0.07 or less, 0.06 or less, or 0.05 or less.

According to an embodiment of the present invention, the transition metal oxide may be prepared by sintering the transition metal hydroxide. As a specific example, the transition metal oxide may be prepared from a step of sintering a transition metal hydroxide, which contains nickel, cobalt, and manganese and contains 60 mol% or more of the nickel among transition metals, in an air or oxygen atmosphere (S1). In this case, the sintering in step (S1) may be performed at a temperature of 800°C or higher, as a specific example, may be performed at a temperature of 800°C or higher, 850°C or higher, 900°C or higher, 950°C or higher, or 1,000°C or higher, and, also, may be performed at a temperature of 1,200°C or less, 1,150°C or less, 1,100°C or less, or 1,050°C or less.

According to an embodiment of the present invention, it may be more desirable to use the transition metal oxide as the positive electrode active material precursor, which contains nickel, cobalt, and manganese and contains 60 mol% or more of the nickel among the transition metals, from the viewpoint of securing higher rolling density for the positive electrode active material of a medium-sized single particle according to the present invention.

According to an embodiment of the present invention, step (S1) may be performed by including the steps of: mixing a transition metal hydroxide and a doping raw material (S1-1); and preparing a transition metal oxide by sintering the mixture mixed in step (S1-1) in an air or oxygen atmosphere (S1-2). In this case, the doping raw material may include at least one doping element selected from a group consisting of Li, Al, Zr, B, W, Mo, Cr, Nb, Mg, Hf, Ta, La, Ti, Sr, Ba, Ce, F, P, S, and Y.

According to an embodiment of the present invention, during the mixing of the positive electrode active material precursor and the lithium raw material in step (S10), a molar ratio (Li/ M) of lithium (Li) of the lithium raw material to the transition metals (M) of the positive electrode active material precursor may be in a range of 0.9 to 1.3. As a specific example, the Li/M may be 0.9 or more, 0.95 or more, or 1.0 or more, and also, may be 1.1 or less, 1.07 or less, 1.05 or less, or 1.03 or less, and the Li/M may be adjusted depending on a nickel content in the transition metals.

## Positive Electrode

The present invention provides a positive electrode including the positive electrode active material.

According to an embodiment of the present invention, the positive electrode may include a positive electrode collector and a positive electrode active material layer formed on the positive electrode collector, wherein the positive electrode active material layer may include the above positive electrode active material.

According to an embodiment of the present invention, the positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

According to an embodiment of the present invention, the positive electrode active material layer may optionally include a conductive agent and a binder in addition to the positive electrode active material, if necessary. In this case, the positive electrode active material may be included in an amount of 80 wt% to 99 wt%, for example, 85 wt% to 98.5 wt% based on a total weight of the positive electrode active material layer, and excellent capacity characteristics may be obtained within this range.

According to an embodiment of the present invention, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

According to an embodiment of the present invention, the binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

According to an embodiment of the present invention, the positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

According to an embodiment of the present invention, the solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

Lithium Secondary Battery

The present invention provides a lithium secondary battery including the positive electrode.

According to an embodiment of the present invention, the lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

According to an embodiment of the present invention, the negative electrode may include a negative electrode collector and a negative electrode active material layer disposed on the negative electrode collector.

According to an embodiment of the present invention, the negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

According to an embodiment of the present invention, the negative electrode active material layer may optionally include a binder and a conductive agent in addition to the negative electrode active material.

According to an embodiment of the present invention, a compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

According to an embodiment of the present invention, the binder of the negative electrode active material layer is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

According to an embodiment of the present invention, the conductive agent of the negative electrode active material layer is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

According to an embodiment of the present invention, the negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

According to an embodiment of the present invention, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present invention, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

According to an embodiment of the present invention, any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

According to an embodiment of the present invention, the lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

According to an embodiment of the present invention, in order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, according to an embodiment of the present invention, a battery module including the lithium secondary battery as a unit cell and a battery pack including the battery module are provided.

According to an embodiment of the present invention, the battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Examples and Comparative Examples**

**Example 1**

A transition metal composite hydroxide ($D_{50}$: 7 $\mu$m) having a composition represented by $Ni_{0.96}Co_{0.03}Mn_{0.01}(OH)_2$ was sintered at 1,020°C for 9 hours in an air atmosphere to prepare a transition metal composite oxide having a composition represented by $Ni_{0.96}CO_{0.03}Mn_{0.01}O$.

The prepared transition metal composite oxide and LiOH were mixed such that a molar ratio (Li/Me) of lithium (Li) to transition metals (Me) was 1, and the mixture was primarily sintered at 800°C for 12 hours in an oxygen atmosphere, then ground using a jet mill, and secondarily sintered at 700°C for 12 hours in an oxygen atmosphere to prepare a positive electrode active material as a lithium transition metal composite oxide in a form of a single particle which had a composition represented by $LiNi_{0.96}Co_{0.03}Mn_{0.01}O_2$.

**Example 2**

A positive electrode active material, as a lithium transition metal composite oxide in a form of a single particle which had a composition represented by $LiNi_{0.96}CO_{0.03}Mn_{0.01}O_2$, was prepared in the same manner as in Example 1 except that, in Example 1, the primary sintering was performed at 850°C instead of 800°C.

**Example 3**

A positive electrode active material, as a lithium transition metal composite oxide in a form of a single particle which had a composition represented by $LiNi_{0.96}CO_{0.03}Mn_{0.01}O_2$, was prepared in the same manner as in Example 1 except that, in Example 1, the secondary sintering was performed at 750°C instead of 700°C.

**Example 4**

A transition metal composite hydroxide ($D_{50}$: 9 $\mu$m) having a composition represented by $Ni_{0.89}Co_{0.03}Mn_{0.08}(OH)_2$ was sintered at 1,020°C for 9 hours in an air atmosphere to prepare a transition metal composite oxide having a composition represented by $Ni_{0.89}Co_{0.03}Mn_{0.08}O$.

The prepared transition metal composite oxide and LiOH were mixed such that a molar ratio (Li/Me) of lithium (Li) to transition metals (Me) was 1, and the mixture was primarily sintered at 900°C for 12 hours in an oxygen atmosphere, then ground using a jet mill, and secondarily sintered at 800°C for 12 hours in an oxygen atmosphere to prepare a positive electrode active material as a lithium transition metal composite oxide in a form of a single particle which had a composition represented by $LiNi_{0.89}Co_{0.03}Mn_{0.08}O_2$.

**Example 5**

A transition metal composite hydroxide ($D_{50}$: 7 $\mu$m) having a composition represented by $Ni_{0.96}Co_{0.03}Mn_{0.01}(OH)_2$ was sintered at 1,020°C for 9 hours in an air atmosphere to prepare a transition metal composite oxide having a composition represented by $Ni_{0.96}Co_{0.03}Mn_{0.01}O$.

The prepared transition metal composite oxide and LiOH were mixed such that a molar ratio (Li/Me) of lithium (Li) to transition metals (Me) was 1.05, and the mixture was primarily sintered at 800°C for 12 hours in an oxygen atmosphere, then ground using a jet mill, and secondarily sintered at 700°C for 12 hours in an oxygen atmosphere to prepare a positive electrode active material as a lithium transition metal composite oxide in a form of a single particle which had a composition represented by $Li_{1.05}Ni_{0.96}Co_{0.03}Mn_{0.01}O_2$.

**Example 6**

A transition metal composite hydroxide ($D_{50}$: 7 $\mu$m) having a composition represented by $Ni_{0.96}Co_{0.03}Mn_{0.01}(OH)_2$ and LiOH were mixed such that a molar ratio (Li/Me) of lithium (Li) to transition metals (Me) was 1, and the mixture was primarily sintered at 830°C for 12 hours in an oxygen atmosphere, then ground using a jet mill, and secondarily sintered at 770°C for 12 hours in an oxygen atmosphere to prepare a positive electrode active material as a lithium transition metal composite oxide in a form of a single particle which had a composition represented by $LiNi_{0.96}Co_{0.03}Mn_{0.01}O_2$.

**Example 7**

A transition metal composite hydroxide ($D_{50}$: 4.5 $\mu$m) having a composition represented by $Ni_{0.885}Co_{0.035}Mn_{0.08}(OH)_2$ and LiOH were mixed such that a molar ratio (Li/Me) of lithium (Li) to transition metals (Me) was 1, and the mixture was primarily sintered at 900°C for 12 hours in an oxygen atmosphere, then ground using a jet mill, and secondarily sintered at 800°C for 12 hours in an oxygen atmosphere to prepare a positive electrode active material as a lithium transition metal composite oxide in a form of a single particle which had a composition represented by $LiNi_{0.885}Co_{0.035}Mn_{0.08}O_2$.

**Comparative Example 1**

A positive electrode active material, as a lithium transition metal composite oxide in a form of a single particle which had a composition represented by $LiNi_{0.96}CO_{0.03}Mn_{0.01}O_2$, was prepared in the same manner as in Example 1 except that, in Example 1, the primary sintering was performed at 700°C instead of 800°C, and the secondary sintering was performed at 800°C instead of 700°C.

**Comparative Example 2**

A positive electrode active material, as a lithium transition metal composite oxide in a form of a single particle which had a composition represented by $LiNi_{0.96}CO_{0.03}Mn_{0.01}O_2$, was prepared in the same manner as in Example 1 except that, in Example 1, the primary sintering was performed at 1,020°C instead of 800°C.

**Comparative Example 3**

A positive electrode active material, as a lithium transition metal composite oxide in a form of a single particle which had a composition represented by $LiNi_{0.96}Co_{0.03}Mn_{0.01}O_2$, was prepared in the same manner as in Example 6 except that, in Example 6, the primary sintering was performed at 770°C instead of 830°C.

**Comparative Example 4**

A positive electrode active material, as a lithium transition metal composite oxide in a form of a single particle which had a composition represented by $LiNi_{0.885}Co_{0.035}Mn_{0.08}O_2$, was prepared in the same manner as in Example 1 except that, in Example 7, the primary sintering was performed at 850°C instead of 900°C.

**Experimental Examples**

**Experimental Example 1: SEM Imaging and Analysis of Cumulative Distribution of Volume According to Particle Diameter**

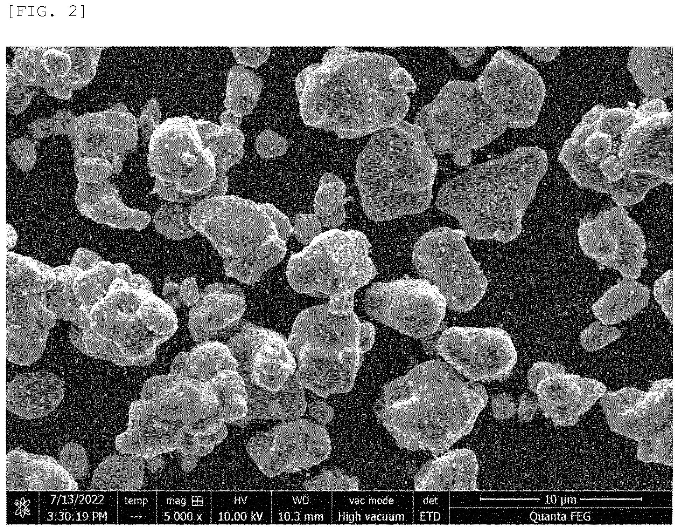

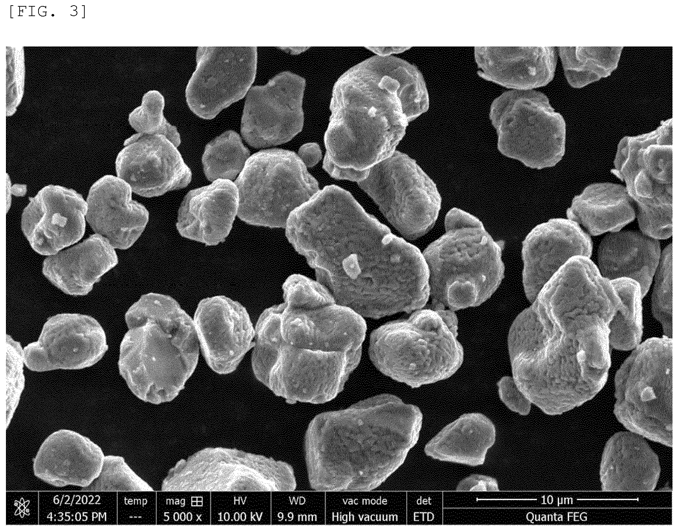

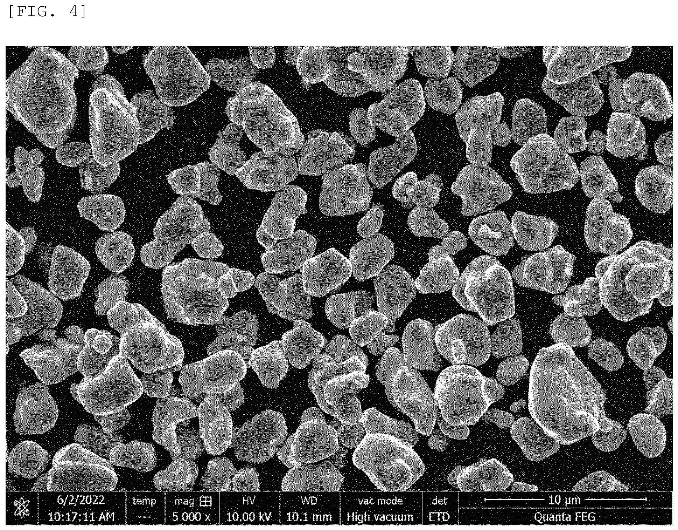

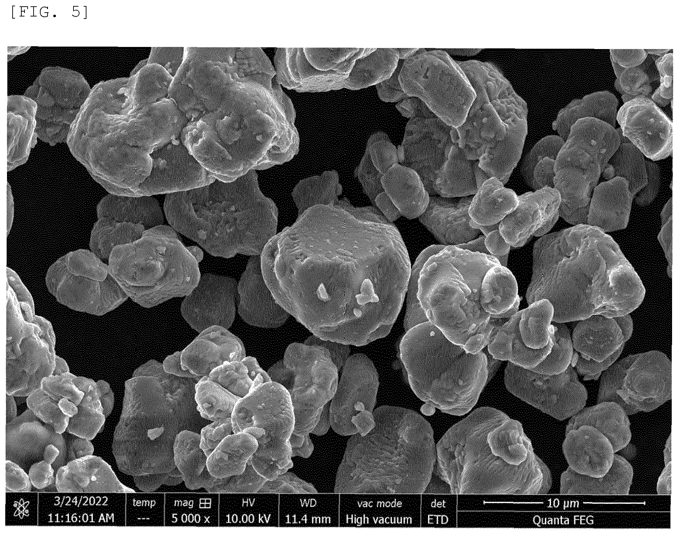

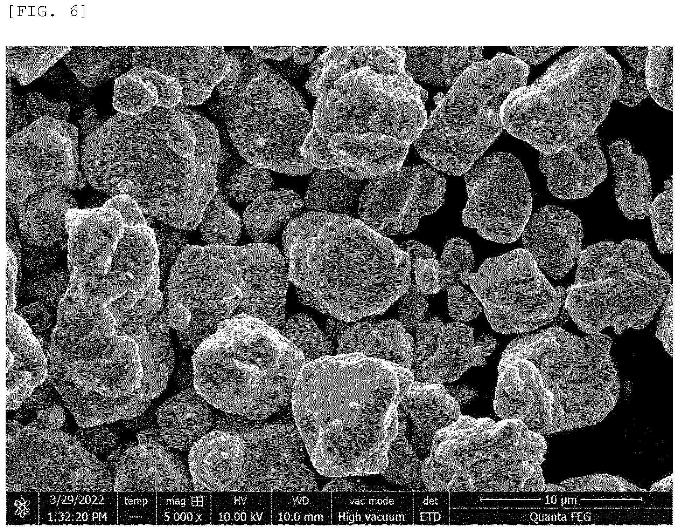

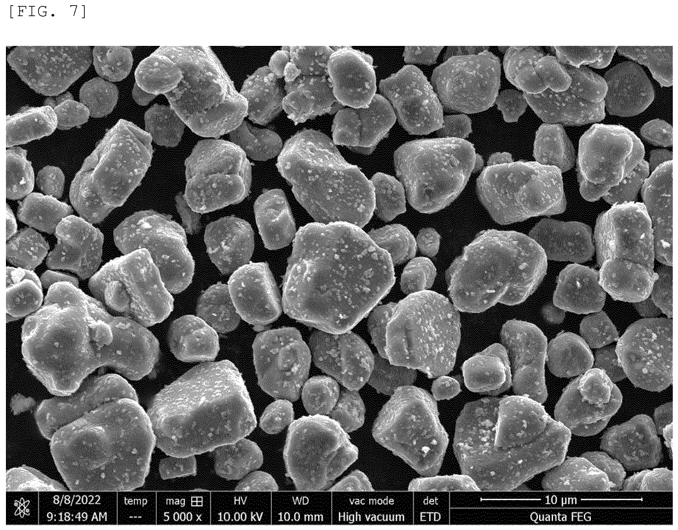

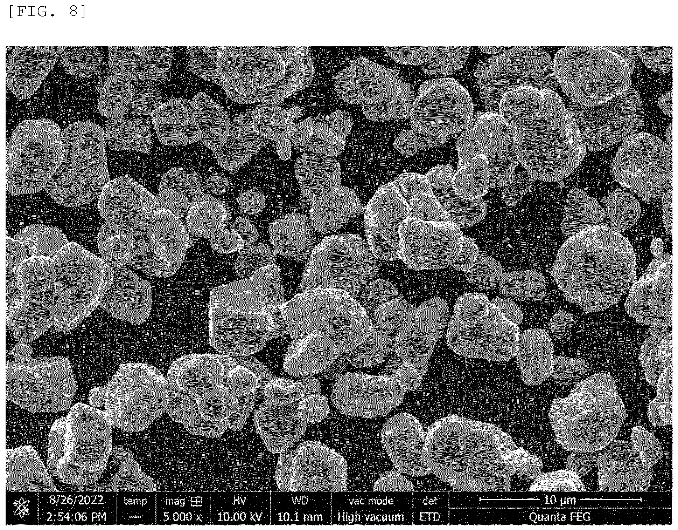

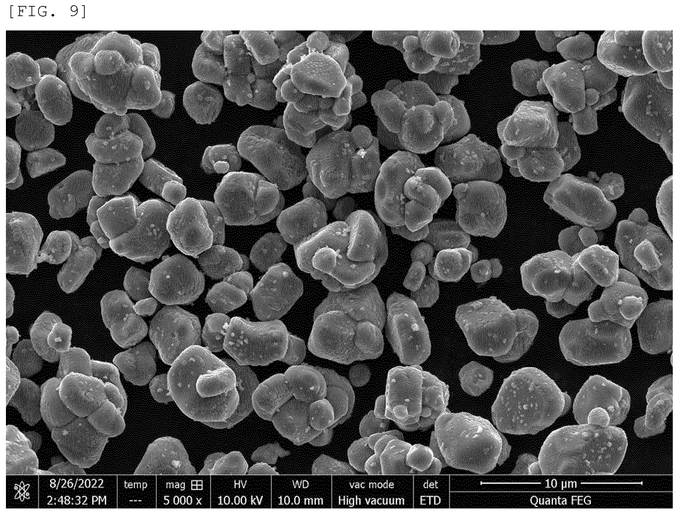

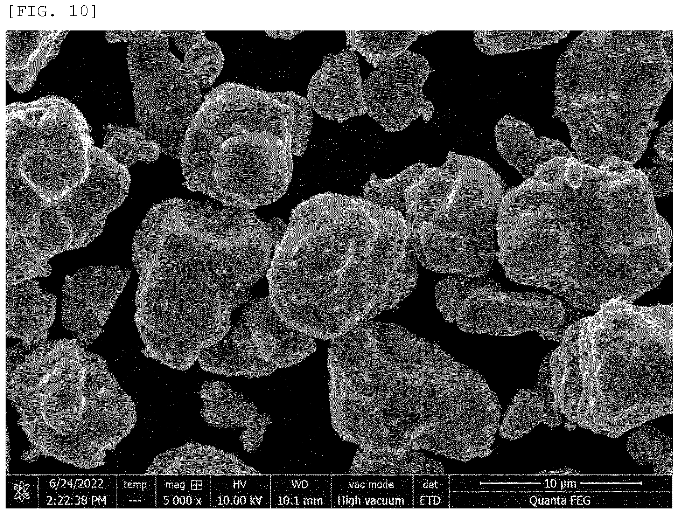

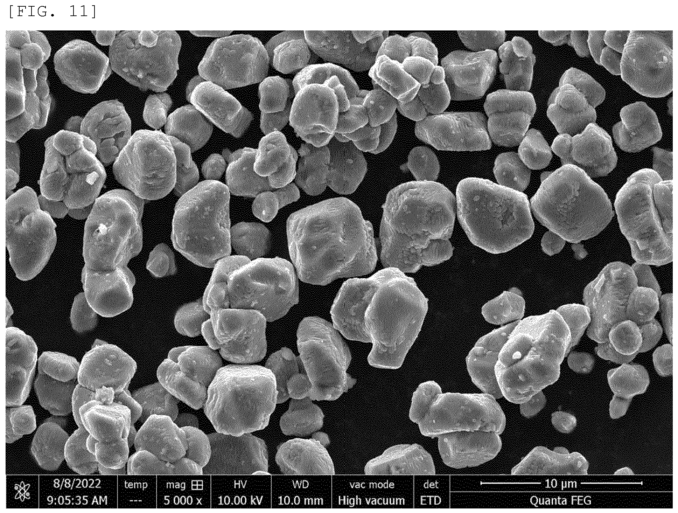

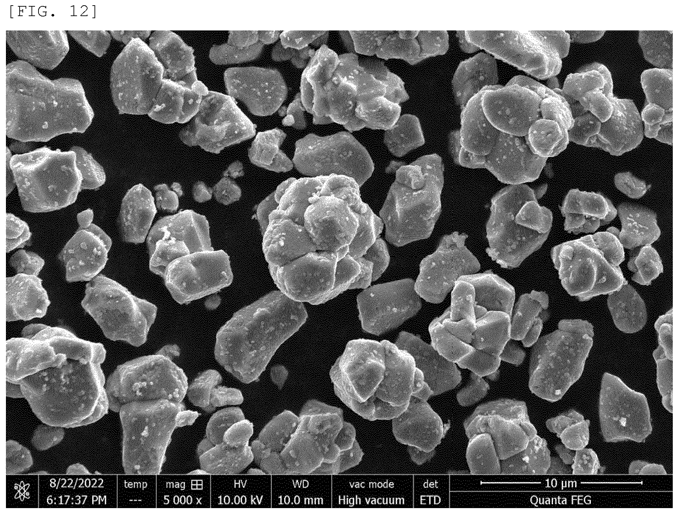

Each of the positive electrode active material precursors, as transition metal complex oxides and transition metal composite hydroxides before mixing with the lithium compound during the preparation of the positive electrode active materials of Examples 1 to 7 and Comparative Examples 1 to 4, and the positive electrode active materials prepared in Examples 1 to 7 and Comparative Examples 1 to 4 was imaged using a scanning electron microscope (SEM, FEI, Inspect F), and these images are illustrated in FIGS. 2 to 12, respectively.

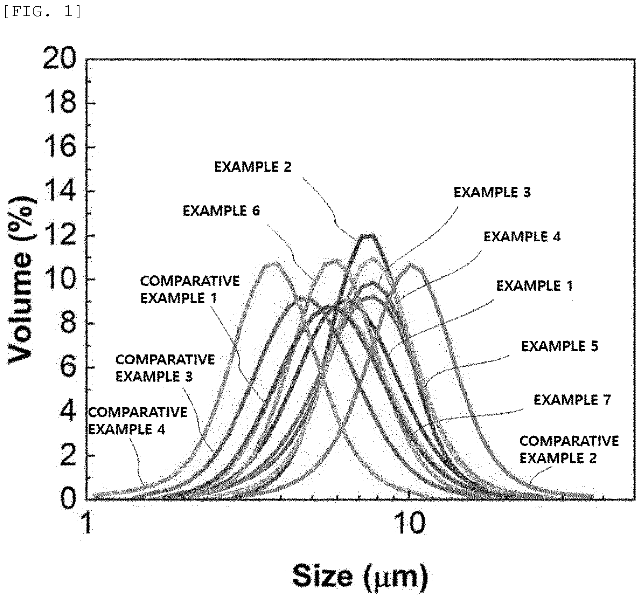

Also, for the positive electrode active materials prepared in Examples 1 to 7 and Comparative Examples 1 to 4, $D_{10}$, $D_{50}$, $D_{90}$, and a mode in a cumulative distribution of volume according to a particle diameter were measured using a particle size analyzer (PSD, Malvern Panalytical Ltd., martersizer 3000) and illustrated in FIG. 1 and Table 1, and a negative skewness value was calculated using Equation 1 below and presented together in Table 1 below.

$$[Equation\ 1]$$

$$Negative\ skewness = (Mode - D_{10})/D_{50}$$

[Table 1]

| Category | $D_{10}$ ($\mu$m) | $D_{50}$ ($\mu$m) | $D_{90}$ ($\mu$m) | Mode (um) | Negative skewness |
|---|---|---|---|---|---|
| Example 1 | 3.18 | 6.14 | 10.21 | 6.54 | 0.547 |
| Example 2 | 4.94 | 7.19 | 10.57 | 7.78 | 0.395 |
| Example 3 | 4.32 | 7.20 | 11.39 | 7.78 | 0.481 |

(continued)

| Category | $D_{10}$ (μm) | $D_{50}$ (μm) | $D_{90}$ (μm) | Mode (um) | Negative skewness |
|---|---|---|---|---|---|
| Example 4 | 3.54 | 7.11 | 11.45 | 7.78 | 0.596 |
| Example 5 | 4.79 | 7.36 | 11.21 | 7.78 | 0.406 |
| Example 6 | 3.44 | 5.62 | 9.46 | 6.00 | 0.456 |
| Example 7 | 3.29 | 5.63 | 8.62 | 6.00 | 0.481 |
| Comparative Example 1 | 3.65 | 6.23 | 10.50 | 6.54 | 0.464 |
| Comparative Example 2 | 6.13 | 9.69 | 14.99 | 11.00 | 0.503 |
| Comparative Example 3 | 2.82 | 4.57 | 7.56 | 4.62 | 0.395 |
| Comparative Example 4 | 2.34 | 3.64 | 5.63 | 3.89 | 0.426 |

As illustrated in FIGS. 2 to 12, it may be confirmed that the positive electrode active materials prepared in Examples 1 to 7 and Comparative Examples 1 to 4 were all prepared as positive electrode active materials in the form of a single particle which were defined in the present invention.

Also, as illustrated in Table 1, it may be confirmed that the positive electrode active materials prepared in Examples 1 to 7 had a $D_{50}$ of 5 μm or more and a negative skewness calculated by Equation 1 of 0.4 or more, and it may be confirmed that the positive electrode active materials prepared in Comparative Examples 3 and 4 had a $D_{50}$ of less than 5 μm.

**Experimental Example 2: Rolling Density Measurement**

Using an automatic pellet press (Auto Pellet Press, Carver, 3887.4), a zero point of thickness was adjusted for a circular pellet holder having a diameter of 13 mm using a cylindrical mold. Subsequently, 3 g of each of the positive electrode active materials prepared in Examples 1 to 7 and Comparative Examples 1 to 4 was put into the circular pellet holder, and a force was applied until it reached 9,000 kgf to measure a thickness of a formed pellet. Subsequently, a pellet volume was calculated using Equation 2 below, rolling density was calculated using Equation 3 below, and the results thereof are presented in Table 2 below.

Pellet volume (cm$^3$) = π(radius of circular pellet holder)$^2$ --> × pellet thickness                    [Equation 2]

Rolling density (g/cm$^3$) = positive electrode active material weight (g)/pellet volume (cm$^3$)                    [Equation 3]

[Table 2]

| Category | Rolling density (g/cm$^3$) |
|---|---|
| Example 1 | 3.72 |
| Example 2 | 3.59 |
| Example 3 | 3.61 |
| Example 4 | 3.67 |
| Example 5 | 3.62 |
| Example 6 | 3.56 |
| Example 7 | 3.65 |
| Comparative Example 1 | 3.53 |
| Comparative Example 2 | 3.53 |
| Comparative Example 3 | 3.51 |
| Comparative Example 4 | 3.54 |

As illustrated in Table 2, it may be confirmed that the positive electrode active materials prepared in Examples 1 to 7 had a $D_{50}$ of 5 $\mu$m or more while being in the form of a single particle through adjustment of the primary sintering temperature and the secondary sintering temperature, had an appropriately adjusted amount of the fine powder according to the negative skewness value, and had a rolling density calculated by Equation 3 of 3.56 g/cm³ or more. From these results, in a case in which the positive electrode active material according to the present invention is used, it is expected that rolling density during preparation of a positive electrode may be improved to increase energy density of a lithium secondary battery and, accordingly, capacity characteristics may be improved.

In contrast, the secondary sintering temperature was higher than the primary sintering temperature with respect to the positive electrode active material prepared in Comparative Example 1, and the secondary sintering temperature was lower than the primary sintering temperature with respect to the positive electrode active material prepared in Comparative Example 2, but, since a difference between these temperatures was excessively large, rolling density was shown to be 3.53 g/cm³ even though $D_{50}$ was 5 $\mu$m or more while being in the form of a single particle and the amount of the fine powder according to the negative skewness value was adjusted to an appropriate level, and thus, it may be confirmed that it not only did not meet the minimum standard to achieve the effect according to the present invention, but there was also a difference of at least 0.06 g/cm³ and up to 0.19 g/cm³ in comparison to Examples 1 and 2 using the positive electrode active material precursor and lithium raw material of the same composition.

Also, since the primary sintering temperature and the secondary sintering temperature were the same with respect to the positive electrode active material prepared in Comparative Example 3, $D_{50}$ was less than 5 $\mu$m as shown in Table 1, and, accordingly, it may be confirmed that rolling density was also low, particularly, a difference in rolling density relative to Example 6 using the positive electrode active material precursor and lithium raw material of the same composition was 0.05 g/cm³.

Furthermore, since the secondary sintering temperature was lower than the primary sintering temperature with respect to the positive electrode active material prepared in Comparative Example 4, but the sintering temperature suitable for the transition metal hydroxide, as the positive electrode active material precursor, was not sufficiently secured, $D_{50}$ was less than 5 $\mu$m as shown in Table 1, and, accordingly, it may be confirmed that rolling density was also low, particularly, a difference in rolling density relative to Example 7 using the positive electrode active material precursor and lithium raw material of the same composition was 0.11 g/cm³.

**Claims**

1. A positive electrode active material comprising a lithium transition metal composite oxide in a form of a single particle which contains nickel, cobalt, and manganese,

   wherein the lithium transition metal composite oxide contains 60 mol% or more of the nickel among total transition metals,
   has a $D_{50}$ of 5 $\mu$m or more, and
   has a rolling density calculated by Equation 3 of 3.56 g/cm³ or more when a pellet is formed by applying a force until the force reaches 9,000 kgf using an automatic pellet press.

   Rolling density (g/cm³) = positive electrode active material weight (g)/pellet volume (cm³)         [Equation 3]

2. The positive electrode active material of claim 1, wherein the lithium transition metal composite oxide in the form of a single particle is a single particle or a secondary particle in which 10 or less primary particles are aggregated.

3. The positive electrode active material of claim 1, wherein the lithium transition metal composite oxide has an average composition represented by Formula 1:

   [Formula 1]         $Li_xNi_aCo_bMn_cM^1_dO_2$

   wherein, in Formula 1,

   $M^1$ is at least one selected from the group consisting of aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), fluorine (F), phosphorus (P), sulfur (S), and yttrium (Y), and $0.9 \leq x \leq 1.3$, $0.6 \leq a < 1.0$, $0 < b < 0.4$, $0 < c < 0.4$, $0 \leq d \leq 0.2$, and $a+b+c+d=1$.

4.  The positive electrode active material of claim 3, wherein x is in a range of 0.9 to 1.1.

5.  The positive electrode active material of claim 1, wherein the $D_{50}$ is in a range of 5 $\mu$m to 9 $\mu$m.

6.  The positive electrode active material of claim 1, wherein the rolling density is in a range of 3.56 g/cm$^3$ to 3.80 g/cm$^3$.

7.  The positive electrode active material of claim 1, wherein a mode in a cumulative distribution of volume according to a particle diameter is greater than the $D_{50}$.

8.  The positive electrode active material of claim 7, wherein the positive electrode active material has a negative skewness value calculated by Equation 1 of greater than 0.

        [Equation 1]

        Negative skewness = (Mode - $D_{10}$)/$D_{50}$

9.  The positive electrode active material of claim 8, wherein the negative skewness value is in a range of 0.40 to 0.75.

10. A positive electrode comprising the positive electrode active material of any one of claims 1 to 9.

11. A lithium secondary battery comprising the positive electrode of claim 10; a negative electrode; a separator disposed between the positive electrode and the negative electrode, and an electrolyte.

[FIG. 1]

[FIG. 2]

[FIG. 3]

[FIG. 4]

[FIG. 5]

[FIG. 6]

[FIG. 7]

[FIG. 8]

[FIG. 9]

| | 8/26/2022 2:48:32 PM | temp --- | mag ⊞ 5 000 x | HV 10.00 kV | WD 10.0 mm | vac mode High vacuum | det ETD | 10 μm Quanta FEG |

[FIG. 10]

[FIG. 11]

[FIG. 12]

| INTERNATIONAL SEARCH REPORT | International application No. |
|---|---|
| | **PCT/KR2023/013250** |

**A.    CLASSIFICATION OF SUBJECT MATTER**

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/525(2010.01); H01M 10/052(2010.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 전이금속 복합 산화물(lithium transition metal composite oxide), 니켈 (nickel), 코발트(cobalt), 망간(manganese), 단입자(single particle), 양극 활물질(positive electrode active material), 압연 밀도 (press density)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2011-0109879 A (SAMSUNG SDI CO., LTD.) 06 October 2011 (2011-10-06)<br>  See paragraphs [0022], [0028], [0043], [0047], [0052], [0078] and [0112]; and table 1. | 1-11 |
| A | KR 10-2022-0057480 A (LG ENERGY SOLUTION, LTD.) 09 May 2022 (2022-05-09)<br>  See entire document. | 1-11 |
| A | KR 10-2020-0047117 A (LG CHEM, LTD.) 07 May 2020 (2020-05-07)<br>  See entire document. | 1-11 |
| A | KR 10-2019-0131842 A (LG CHEM, LTD.) 27 November 2019 (2019-11-27)<br>  See entire document. | 1-11 |
| A | WO 2022-098136 A1 (LG ENERGY SOLUTION, LTD.) 12 May 2022 (2022-05-12)<br>  See entire document. | 1-11 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 December 2023** | **08 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/013250**

| Patent document cited in search report | | | Publication date (day/month/year) | Patent family member(s) | | | Publication date (day/month/year) |
|---|---|---|---|---|---|---|---|
| KR | 10-2011-0109879 | A | 06 October 2011 | CN | 102208642 | A | 05 October 2011 |
| | | | | CN | 102208642 | B | 11 March 2015 |
| | | | | EP | 2372819 | A2 | 05 October 2011 |
| | | | | EP | 2372819 | A3 | 02 January 2013 |
| | | | | EP | 2372819 | B1 | 06 August 2014 |
| | | | | JP | 2011-216485 | A | 27 October 2011 |
| | | | | JP | 5868604 | B2 | 24 February 2016 |
| | | | | KR | 10-1243912 | B1 | 14 March 2013 |
| | | | | US | 2011-0240913 | A1 | 06 October 2011 |
| | | | | US | 8871113 | B2 | 28 October 2014 |
| KR | 10-2022-0057480 | A | 09 May 2022 | CN | 116420251 | A | 11 July 2023 |
| | | | | EP | 4220772 | A1 | 02 August 2023 |
| | | | | WO | 2022-092922 | A1 | 05 May 2022 |
| KR | 10-2020-0047117 | A | 07 May 2020 | US | 2020-0136141 | A1 | 30 April 2020 |
| KR | 10-2019-0131842 | A | 27 November 2019 | CN | 111819718 | A | 23 October 2020 |
| | | | | EP | 3751646 | A1 | 16 December 2020 |
| | | | | EP | 3751646 | A4 | 21 April 2021 |
| | | | | JP | 2021-516424 | A | 01 July 2021 |
| | | | | JP | 7139008 | B2 | 20 September 2022 |
| | | | | KR | 10-2022-0132491 | A | 30 September 2022 |
| | | | | KR | 10-2539694 | B1 | 02 June 2023 |
| | | | | US | 2021-0135187 | A1 | 06 May 2021 |
| | | | | WO | 2019-221497 | A1 | 21 November 2019 |
| WO | 2022-098136 | A1 | 12 May 2022 | KR | 10-2022-0061035 | A | 12 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220113918
- KR 101785262 B1
- KR 1020170119573 A